# EUROPEAN PATENT APPLICATION

(11) **EP 4 738 158 A1**
(43) Date of publication of application: **06.05.2026**
(21) Application number: 25211932.6
(22) Date of filing: 29.10.2025
(51) Int. Cl.: G06F 21/32, G06F 21/62, G07C 9/00, G07C 9/37, H04L 9/32, H04L 9/40, H04W 12/084

(54) **BIOMETRIC AUTHENTICATION APPARATUS, BIOMETRIC AUTHENTICATION SYSTEM, AND COMPUTER PROGRAM**

(30) Priority: 30.10.2024 JP 2024190890
(71) Applicant: Canon Kabushiki Kaisha, Tokyo, 146-8501 (JP)
(72) Inventor: SATO, Taku, Tokyo, 146-8501 (JP)
(74) Representative: TBK

(57) **Abstract**

A biometric authentication apparatus (101, 203A, 203B) comprises an acquiring means (303) configured to acquire a condition for consent regarding acquisition and use of biometric information of a person; and a biometric authentication means (308) configured to perform biometric authentication on the person based on the condition for consent.

## Description

### TECHNICAL FIELD

The present disclosure relates to a biometric authentication apparatus, a biometric authentication system, a method, and a computer program.

### BACKGROUND

In recent years, the importance of protection of personal information has increased. In face authentication systems, strict limitations are imposed on the acquisition and use of large numbers of face images and face feature amounts.

Here, face feature amounts are obtained by converting external patterns of a face into multidimensional vectors.

Since an individual can be identified using a face feature amount, face feature amounts are considered to be a type of biometric identifier. For example, the state of Illinois in the United States requires written consent from an individual when acquiring face feature amounts. The EU is also considering a law that prohibits the use of face authentication in public spaces. Due to national and state legislation, the acquisition and use of face feature amounts may be restricted more than the acquisition and use of face images.

Therefore, methods have been proposed to restrict the acquisition and use of face images or face feature amounts. Japanese Patent No. 6150019 proposes a system in which, when a person to be a subject of face authentication performs a specific gesture, personal information that has been acquired for that person is deleted. Also, Japanese Patent No. 7126138 proposes a face authentication system in which consent for the acquisition and use of personal information such as a face image is obtained in advance from a person to be a subject of face authentication.

Here, the acquisition and use of large numbers of face images and face feature amounts may be legally restricted in terms of application and/or location. Note that if a person who is a subject individually consents to the use of personal information under such legal restrictions, it is necessary for the personal information of the consenting person to made available. In this way, with respect to the acquisition and use of face images and face feature amounts, it is necessary to able to limit the use of large numbers of pieces of personal information while also being able to adjust limitations on the use of personal information for each individual.

### SUMMARY

However, in Japanese Patent No. 6150019, if a person does not perform a gesture to express their intent to prohibit the acquisition and use of their face image or face feature amount, a third party can acquire and use the person's face image or face feature amount even though the person does not consent to the acquisition and use of personal information. Furthermore, in Japanese Patent No. 7126138, with respect to the acquisition and use of a face image or a face feature amount for each individual, the application and terms of use associated with a face image or a face feature amount cannot be changed for each individual.

In view of this, the present disclosure provides a technology for securely and easily using biometric information for individuals.

The present disclosure in its first aspect provides a biometric authentication apparatus as specified in claim 1. Optional features are specified in claims 2 to 10.

The present disclosure in its second aspect provides a biometric authentication system as specified in claim 11. Optional features are specified in claims 13 to 14.

The present disclosure in its third aspect provides a method as specified in claim 15.

The present disclosure in its fourth aspect provides a computer program as specified in claim 16.

According to the present disclosure, it is possible to securely and easily use biometric information for individuals.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a diagram illustrating an example of a hardware configuration of an information processing apparatus according to first and second embodiments.
FIG. 2 is a diagram illustrating an overview of a configuration of a system according to the first embodiment.
FIG. 3A is a diagram illustrating a functional configuration of an entry/exit management device according to the first embodiment.
FIG. 3B is a diagram illustrating a functional configuration of a monitoring system according to the first embodiment.
FIG. 4 is a diagram showing an example of a UI screen via which a person sets a consent condition according to the first embodiment.
FIG. 5A is a diagram illustrating data 501 managed by a server device according to the first embodiment.
FIG. 5B is a diagram illustrating data 502 stored in the entry/exit management device according to the first embodiment.
FIG. 5C is a diagram illustrating data 503 obtained by combining the data 501 and the data 502 according to the first embodiment.
FIG. 6A is a flowchart illustrating entry/exit authorization setting processing performed by the entry/exit management device according to the first embodiment.
FIG. 6B is a flowchart illustrating processing for acquiring a registered face feature amount, performed by the entry/exit management device according to the first embodiment.
FIG. 6C is a flowchart illustrating entry/exit gate control processing performed by the entry/exit management device according to the first embodiment.
FIG. 7 is a diagram illustrating an overview of a system configuration according to the second embodiment.
FIG. 8 is a diagram illustrating a functional configuration of an immediate consent registration device according to the second embodiment.
FIG. 9 is a flowchart illustrating processing executed by the immediate consent registration device according to the second embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

In a first embodiment, a consent condition (application, terms of use) regarding the acquisition and use of a face image or a face feature amount of a person can be set in detail for each person, and a consent condition can be acquired from a person. In this specification, a face image and a face feature amount of a person are collectively called biometric information. Furthermore, in the first embodiment, a face image and a face feature amount can be acquired and used based on a consent condition acquired for a corresponding person. As a result, a face authentication system acquires and uses a face image or a face feature amount of a consenting person, and does not unintendedly acquire or use a face image or a face feature amount of a non-consenting person. As a result, personal privacy can be protected.

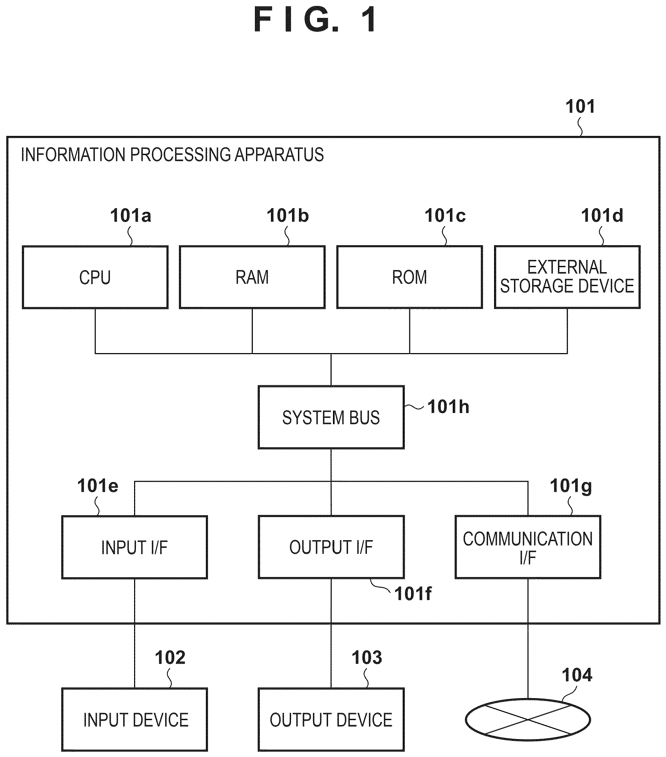

FIG. 1 is a diagram illustrating an example of the hardware configuration of an information processing apparatus according to first and second embodiments.

An information processing apparatus 101 is connected to an input device 102, an output device 103, and a network 104. In each of the embodiments, one or more information processing apparatuses 101 are used. Note that the information processing apparatus 101 is used as a mobile terminal device 201, a server device 202, an entry/exit management device 203A, a monitoring device 203B, and an immediate consent registration device 701, which will be described later.

The information processing apparatus 101 includes a Central Processing Unit (CPU) 101a, a Random Access Memory (RAM) 101b, a Read Only Memory (ROM) 101c, an external storage device 101d, an input I/F 101e, an output I/F 101f, and a communication I/F 101g. The components of the information processing apparatus 101 are connected to each other in a communication-enabling manner via a system bus 101h.

The CPU 101a performs overall control of the information processing apparatus 101.

The RAM 101b temporarily stores data received from the external storage device 101d and/or received from an external device (not shown) via the input I/F 101e and the communication I/F 101g. The RAM 101b functions as a main memory and a work area for the CPU 101a.

The ROM 101c stores, for example, a control program executed by the CPU 101a.

The external storage device 101d is a storage device such as a hard disk and/or a memory card fixedly provided in the information processing apparatus 101. Note that the external storage device 101d may include a storage device that can be attached to and detached from the information processing apparatus 101, examples of which include a flexible disk (FD), an optical disk such as a compact disk (CD), a magnetic or optical card, an IC card, and a memory card.

The input I/F 101e is an interface between the information processing apparatus 101 and the input device 102.

The output I/F 101f is an interface between the information processing apparatus 101 and the output device 103.

The communication I/F 101g is an interface between the information processing apparatus 101 and an external device (not shown) connected to the network 104.

The input device 102 accepts a user operation. The input device 102 is, for example, a pointing device or a keyboard through which a user inputs data.

The output device 103 is a display for displaying data held by the information processing apparatus 101 and program processing results. The display is, for example, a liquid crystal display (LCD) display or an organic electro-luminescence (EL) display.

The network 104 is a communication device by which the information processing apparatus 101 performs communication with an external device (not shown). The information processing apparatus 101 can perform communication with, for example, a network camera for capturing images of a subject, a database from which data is acquired, and an external server to which service inquiries are made.

Note that the hardware configuration of the information processing apparatus 101 is not limited to the above configuration, and may be any desired configuration.

### First Embodiment

In the first embodiment, a system (more specifically, a biometric authentication system) including a monitoring device 203B and an entry/exit management device 203A that uses face authentication will be described. The system is, for example, a face authentication system such as an entry/exit management system for employees in an enterprise, or lost child search system using in a large commercial facility. In the face authentication system according to the first embodiment, a user of the face authentication system (i.e., a person to be a subject of face authentication) can set consent information regarding the application and terms of use of biometric information (a face image and/or a face feature amount) in various situations in advance. As described above, the biometric information includes at least either a face image or a face feature amount of a person. In one embodiment, biometric authentication is face authentication. Note that when the subject is a child (e.g., a minor), a guardian of the child sets consent information regarding the child. Accordingly, the user of the face authentication system can perform setting such that the acquisition and use of a face image and/or a face feature amount is permitted only when necessary.

Advantages such as the following can be obtained when the system of the first embodiment is used as an entry/exit management system for employees in an enterprise. When there are multiple entry/exit management devices of affiliated companies, employees do not need to repeatedly perform a consent procedure for face authentication. Also, by broadening the scope of employee consent for face authentication outside of work, employees do not need to perform a face authentication consent procedure when entering and exit another company.

Also, when the system of the first embodiment is used as a lost child search system, and furthermore there are multiple face authentication apparatuses in a facility (e.g., a commercial facility), the guardian of a lost child does not need to repeatedly perform a face authentication consent procedure for the child. Also, by broadening the scope of child face authentication consent to other facilities (e.g., other commercial facilities), it is possible to eliminate the need for the guardian of the lost child to perform the child face authentication consent procedure for other facilities located elsewhere.

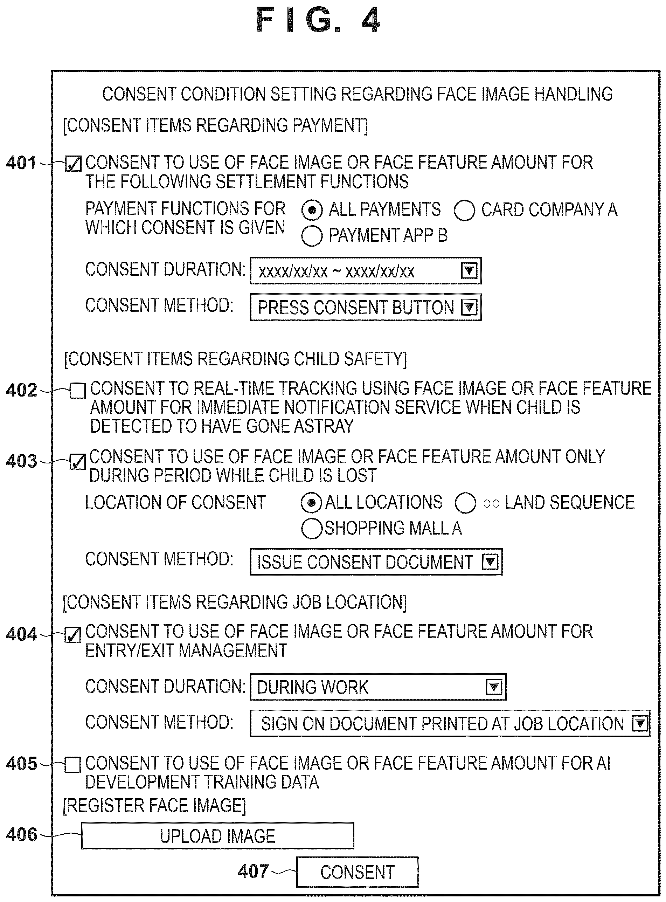

Here, in the first embodiment, when acquiring or using a face image or a face feature amount, the application and terms of use permitted by a person to be a subject of face authentication will be referred to as a "consent condition". The consent condition includes conditions upon which a person permits the acquisition or use of the person's biometric information. Regarding the acquisition/use of personal information (biometric information), the consent condition includes the purpose of use, the period of use, the period of storage, and the effective period of consent, the type of biometric information (e.g., face image or face feature amount), the handler, the manager, the department in charge, and the method of acquisition (e.g., image acquisition method). The consent condition includes at least a consent condition registered in advance by a person using the UI shown in FIG. 4 or a consent condition predicted based on information that does not identify an individual obtained from the person's biometric information (e.g., an image of the person), or both of such consent conditions. Also, in addition to the information listed above, the consent condition may include detailed conditions such as the countries, locations, and time zones in which the use of the person's personal information is permitted. The consent condition may include any setting conditions desired by the user of the system, and various items may be subject to the consent condition. Also, the system manager can store other necessary information as metadata when storing the consent condition. For example, when obtaining consent for the use of a person's personal information in accordance with the laws or regulations of a region or organization, it may be necessary to keep items such as the handler, manager, and department in charge for the personal information together with the consent condition. The metadata that is stored is not limited to the form of the above-mentioned metadata, and may include various types of data as long as it is necessary and legally appropriate.

### (System Configuration)

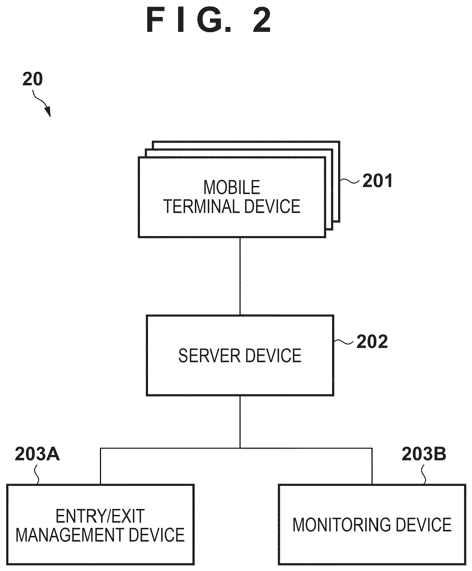

FIG. 2 is a diagram illustrating an overview of the configuration of the system according to the first embodiment.

A system 20 includes the mobile terminal device 201, the server device 202, an entry/exit management device 203A, and a monitoring device 203B. The system 20 is a biometric authentication system that performs biometric authentication of a person, and is, for example, a face authentication system. As described with reference to FIG. 1, the information processing apparatus 101 is used as the mobile terminal device 201, the server device 202, the entry/exit management device 203A, and the monitoring device 203B. Therefore, the mobile terminal device 201, the server device 202, the entry/exit management device 203A, and the monitoring device 203B each have a configuration similar to that of the information processing apparatus 101. The entry/exit management device 203A and the monitoring device 203B are examples of a biometric authentication apparatus. In one embodiment, the biometric authentication apparatus is used for entry/exit management or monitoring.

The mobile terminal device 201 is a device by which a person to be a subject of face authentication sets (inputs) a consent condition regarding the acquisition and use of a face image or a face feature amount, whether there is consent, a related face image, and the like. The system 20 includes one or more mobile terminal devices 201. The input device of the mobile terminal device 201 (input device 102 shown in FIG. 1) includes an image capturing device, a key input device, and a pointing device. The output device of the mobile terminal device 201 (the output device 103 shown in FIG. 1) is a display device. The mobile terminal device 201 may be a smartphone or a PC in the possession of an individual, but is not limited to this. Note that the mobile terminal device 201 may be any device capable of registering a consent condition, which will be described later. A detailed method of registering a consent condition will be described later with reference to FIG. 4.

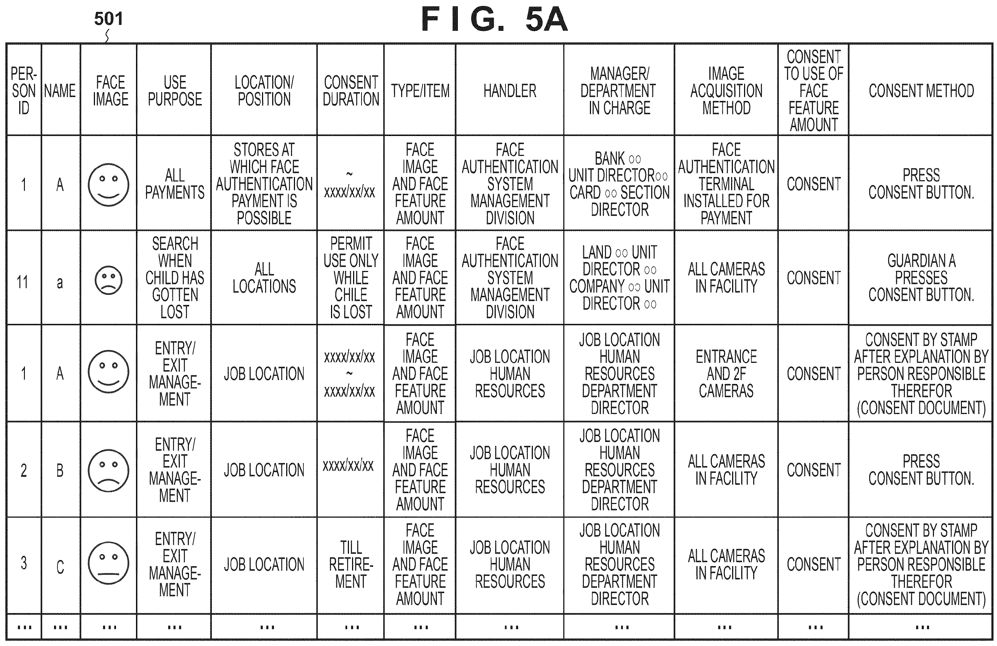

The server device 202 manages the consent conditions of persons set using the mobile terminal devices 201. The input device of the server device 202 (the input device 102 in FIG. 1) is a keyboard device. The output device of the server device 202 (the output device 103 in FIG. 1) is a display device. The server device 202 is configured by one or more information processing apparatuses 101. The server device 202 may be a stand-alone PC. The server device 202 may be a cloud server to which a plurality of PCs are connected via a network. The consent condition of the managing person will be described below using FIGS. 5A to 5C.

The entry/exit management device 203A controls the opening and closing of an entry/exit gate through face authentication. The entry/exit management device 203A manages the entry/exit of employees in a company. The input device of the entry/exit management device 203A (the input device 102 in FIG. 1) includes a keyboard, a mouse, and an image capturing device. The output device of the entry/exit management device 203A (the output device 103 in FIG. 1) includes a display device and an entry/exit gate device.

The monitoring device 203B monitors a specified person specified by face authentication. Here, it is assumed that a lost child search is performed in a large commercial facility using the monitoring device 203B, for example. The input device of the monitoring device 203B (the input device 102 in FIG. 1) includes a keyboard, a mouse, and an image capturing device. The output device of the monitoring device 203B (the output device 103 in FIG. 1) includes a display device.

Here, the entry/exit management device 203A (a plurality thereof) and the monitoring device 203B (a plurality thereof) are devices illustrated in order to describe various services that use the face authentication system according to the first embodiment. Note that the first embodiment is applicable to systems other than the entry/exit management and monitoring system, such as an electronic payment system that uses face authentication, and a recommendation system for detecting a regular customer by face authentication and providing a service customized to the preferences of the regular customer. When the first embodiment is applied to such systems, the consent management mechanism described in the first embodiment can be used.

### (Functional Configuration)

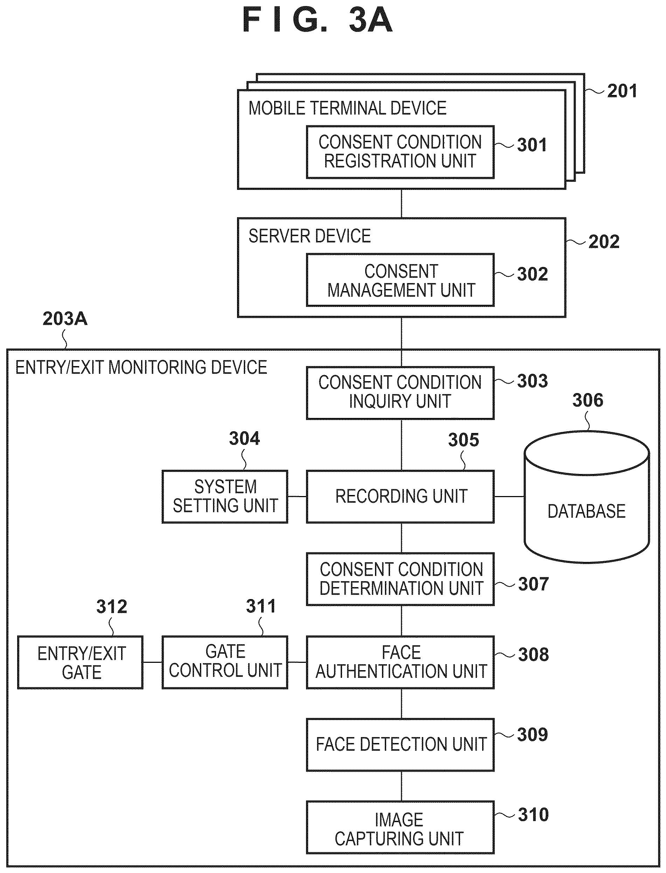

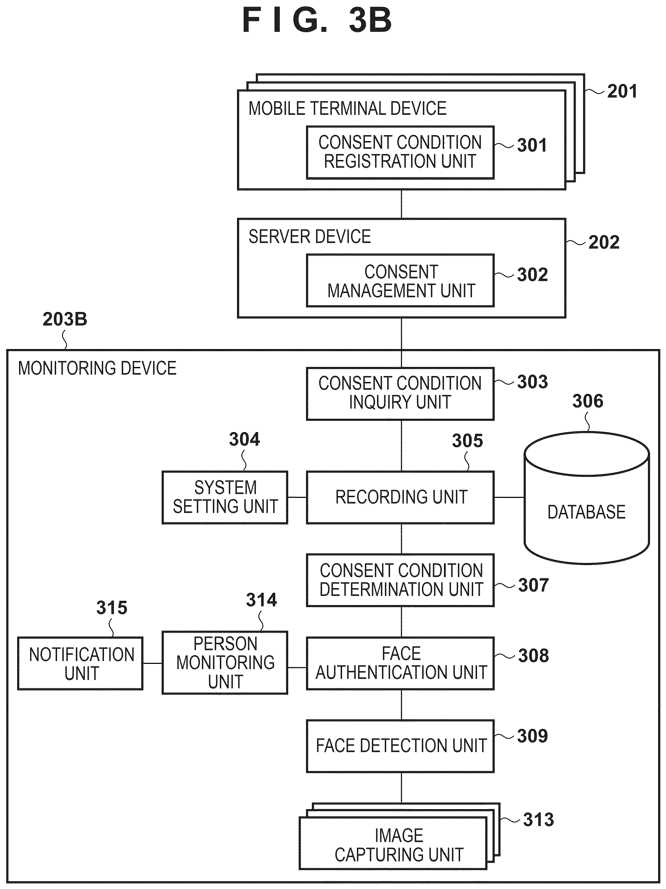

FIG. 3A is a diagram illustrating the functional configuration of the entry/exit management device according to the first embodiment. FIG. 3B is a diagram illustrating the functional configuration of the monitoring system according to the first embodiment. Reference numerals 201, 202, 203A, and 203B in FIGS. 3A and 3B correspond to 201, 202, 203A, and 203B in FIG. 2. Also, in FIGS. 3A and 3B, functional blocks denoted by the same reference numerals have the same functions.

The entry/exit management device 203A manages the entry and exit of employees who are registered in the system 20 and have consented to entry/exit management by face authentication. The functional configuration of a consent condition registration unit 301 of the mobile terminal device 201 and a consent management unit 302 of the server device 202 will be described below. The consent condition registration unit 301 is a consent condition registering unit for registering a consent condition regarding the acquisition and use of a person's biometric information. The consent management unit 302 is a consent condition managing unit for managing the consent conditions registered by the consent condition registration unit 301.

The consent condition registration unit 301 of the mobile terminal device 201 acquires a consent condition and a face image from a person to be a subject of face authentication. The consent condition registration unit 301 registers the acquired consent condition and face image in the consent management unit 302 of the server device. A method of acquiring and registering the consent condition and the face image will be described later with reference to FIG. 4.

The consent management unit 302 of the server device 202 manages the consent conditions and the face images registered by the consent condition registration unit 301. For example, the consent management unit 302 manages data using the data structure shown in FIG. 5A. Here, the consent management unit 302 assigns a unique person ID to each individual (person) and manages consent conditions and face images in association with the person IDs. Therefore, various types of data associated with a person ID can be referred to as appropriate. A person to be a subject of face authentication can check their own person ID via the consent condition registration unit 301.

The functional configuration of the entry/exit management device 203A will be described below with reference to a block diagram.

A consent condition inquiry unit 303 makes, to the consent management unit 302 of the server device 202, an inquiry regarding a consent condition and a face image for an individual (employee). The consent condition inquiry unit 303 is an acquiring unit for acquiring a consent condition regarding the acquisition and use of a person's biometric information. Here, the consent condition inquiry unit 303 acquires a person ID (a character string or a number string by which a person can be uniquely identified) from a database 306 via a recording unit 305. Processing for storing a person ID in the database 306 will be described later in a description of a system setting unit 304. The consent condition inquiry unit 303 acquires a consent condition regarding the acquisition and use of a person's biometric information from the server device 202 that communicates with the entry/exit management device 203A (biometric authentication apparatus). The consent condition inquiry unit 303 transmits a person ID to the consent management unit 302, and acquires the consent condition and the face image that correspond to the transmitted person ID from the consent management unit 302. The consent condition inquiry unit 303 stores the acquired consent condition and face image in the database 306 via the recording unit 305.

The system setting unit 304 acquires the person IDs of all people permitted to enter/exit and a list of gates that can be entered and exited by all people permitted to enter/exit, and stores the acquired information in the database 306 via the recording unit 305. Here, the manager of the system 20 asks for person IDs from people who are permitted to enter/exit, determines which gates can be entered and exited for each person, and inputs the person IDs and the gates that can be entered and exited to the system setting unit 304.

The recording unit 305 controls the storage, updating, and deletion of data in the database 306.

The database 306 is a database that stores data in the data structure shown in FIGS. 5A to 5C.

A consent condition determination unit 307 is a consent condition determining unit for determining, based on a consent condition, whether the acquisition and use of a person's biometric information is permitted. The consent condition determination unit 307 determines whether the acquisition and use of a person's biometric information is permitted based on whether or not there are contradicting items in the consent condition. For each person, the consent condition determination unit 307 determines a consent condition and determines whether or not face authentication is to be performed. The consent condition determination unit 307 checks whether there are contradicting items in the consent condition. More specifically, the consent condition determination unit 307 checks whether the use/storage period or the effective period of consent has passed. The consent condition determination unit 307 also checks whether the purpose of use and the face image acquisition method comply with the situation. The consent condition determination unit 307 also checks whether a person has permitted the use of a face feature amount. As described at the beginning of the first embodiment, the consent condition includes various items. Therefore, if the consent condition includes items other than the above-described items, the consent condition determination unit 307 checks such items.

In the first embodiment, it is assumed that face authentication is performed on a person for which there are no contradicting items in the consent condition. Also, the consent condition determination unit 307 transmits, to a face authentication unit 308, the person ID and the face image of a person for which it was determined that face authentication is to be performed.

The face authentication unit 308 is a biometric authenticating unit for performing biometric authentication on a person based on a consent condition. If the consent condition determination unit 307 determines that the acquisition and use of a person's biometric information is permitted, the face authentication unit 308 performs biometric authentication on the person. The face authentication unit 308 identifies the person who corresponds to a face detected by a face detection unit 309. Specifically, the face authentication unit 308 converts the registered face images in the recording unit 305 and the face image detected by the face detection unit 309 into face feature amounts. The face authentication unit 308 specifies a person ID by comparing the face feature amounts of the face images with the face feature amount of the detected face image.

When the face authentication unit 308 converts a face image into a face feature amount, a neural network that converts an external pattern of a face into a multidimensional vector (feature amount) is used. The neural network is pre-trained so as to convert a pair of face images of the same person into feature amounts that are close to each other in a feature space, and convert a pair of face images of different people into feature amounts that are distant from each other in the feature space. The above-described neural network is merely an example, and the person ID may be specified using another method. Examples of other techniques include a dimension reduction technique called Principal Component Analysis (PCA) and a clustering technique called k-means. The other methods described above are merely examples, and it possible to use any method capable of extracting a multidimensional vector (feature amount) that distinguishes between a pair of face images of the same person and a pair of face images of different people.

When the face feature amounts are compared with each other, cosine similarity between the feature amounts is calculated. If a feature amount pair has a cosine similarity that exceeds a preset threshold value, those feature amounts are deemed to be feature amounts extracted from the same person. Here, the comparison of feature amounts is not limited to the above-described method. For example, two people for which the cosine similarity exceeds the threshold value and is the highest may be deemed to be the same person. Also, for example, the Euclidean distance or the Manhattan distance may be used. The comparison method is not limited to these examples, and it is possible to use any method that can quantitatively calculate the distance between the two feature amounts.

The face detection unit 309 detects a face region in an image acquired by an image capturing unit 310. This detection is performed using a face detection neural network called Retinaface (Non-Patent Literature 1: Deng, Jiankang, et al. "Retinaface: Single-shot multilevel face localisation in the wild." Proceedings of the IEEE/CVF conference on computer vision and pattern recognition, 2020). The present disclosure is not limited to this, and it is possible to use any method that can detect a face region.

The image capturing unit 310 is an image capturing device that acquires images of a person to be a subject of face authentication. A surveillance camera is used as the image capturing unit 310 here, but the present disclosure is not limited to this. The image capturing unit 310 is not limited to this, and may be any device that can capture an image or a moving image and acquire image data.

A gate control unit 311 controls the opening and closing of an entry/exit gate 312 based on an authentication result from the face authentication unit 308. When the face authentication unit 308 succeeds in specifying a person ID, the gate control unit 311 transmits a gate open command to the entry/exit gate 312. On the other hand, if the face authentication unit 308 fails to specify a person ID, the gate control unit 311 does not transmit a command to open the entry/exit gate 312.

If the face authentication unit 308 fails to specify a person ID, the gate control unit 311 executes error processing for notifying that the specification of a person ID failed, using audio and a screen display. The control method is not limited to such methods, and it is possible to use any method that can open the entry/exit gate 312 for a person who has entry/exit authorization and prevent opening of the entry/exit gate 312 for a person who does not have entry/exit authorization.

If a command to open the entry/exit gate 312 is received from the gate control unit 311, the entry/exit gate 312 opens, and if a command to open the entry/exit gate 312 is not received, the entry/exit gate 312 does not open.

Next, a description will be given for the monitoring device 203B shown in FIG. 3B. The monitoring device 203B performs a lost child search in a large commercial facility.

In FIGS. 3A and 3B, functional blocks assigned the same names and symbols have the same functions. Note that the system setting unit 304 uses a person ID to designate a person to be monitored on the setting screen. For example, in a use case corresponding to a lost child search, a guardian (parents) of a lost child notifies the child's person ID to the manager of the monitoring device 203B. Then, the manager sets the child's person ID via the system setting unit 304.

Here, similarly to the case of the entry/exit management device 203A, the monitoring device 203B transmits the person IDs of all persons to be monitored from the consent condition inquiry unit 303 to the consent management unit 302, and acquires consent conditions and face images. Also, the face authentication unit 308 converts the acquired face images into face feature amounts. The face authentication unit 308 compares the face feature amounts acquired from the consent management unit 302 with a face feature amount for collation obtained by converting a face image acquired from the face detection unit 309, and identifies a person ID.

Image capturing units 313 are image capturing devices that acquire an image of a person to be a subject of face authentication. The example in FIG. 3B is different from that in FIG. 3A in that there are a plurality of image capturing units 313 installed at locations to be monitored in a facility. Here, the image capturing units 313 in FIG. 3B acquire moving images, reduce the frame rate of the moving image to a minimum necessary for the lost child search, and transmit the resulting images to the face detection unit 309. For example, if there are ten image capturing devices that capture moving images at 30fps, it is not the case that all of 300 images per second are transmitted to the face detection unit 309. One out of 10 images is extracted for every image capturing device, and 30 images per second are transmitted to face detection unit 309. However, the image transmission method is not limited to this method. The designer of the face authentication system can determine the image transmission method based on the processing performance of the image capturing units 313 and the search speed required of the face authentication system.

Note that each of the image capturing units 313 in FIG. 3B assigns an identification number and an installation position of the image capturing unit 313 as metadata to the images to be transmitted to the face detection unit 309, and transmits the images and metadata together to the face detection unit 309.

A person monitoring unit 314 acquires an authentication result from the face authentication unit 308 and meta information from the image capturing units 313. More specifically, the person monitoring unit 314 transmits, to a notification unit 315, the identification number and the installation position of the image capturing unit 313 that captured an image of the subject to be monitored.

Via the display, the notification unit 315 notifies the system manager of the identification number and the installation position of the image capturing unit 313 that captured an image of a monitoring target who matches the search target. The notification method for notifying the identification number and the installation position of the image capturing unit 313 is not limited to this. For example, the notification unit 315 may notify the identification number and the installation position of the image capturing unit 313 directly to a guardian of the monitoring target by e-mail, or may disclose the identification number and the installation position of the image capturing unit 313 via a web server.

### (UI: User Interface)

FIG. 4 is a diagram illustrating an example of a UI screen in which the person sets a consent condition according to the first embodiment.

The consent condition registration unit 301 of the mobile terminal device 201 displays a user interface (UI) via which a person to be a subject of face authentication can set (input) a consent condition. The consent condition registration unit 301 of the mobile terminal device 201 presents a consent condition including items for various face authentication services to the person to be a subject of face authentication, as shown in items 401 to 405 of FIG. 4.

The consent condition registration unit 301 registers a consent condition in the consent management unit 302 based on the results set by the person in the consent condition setting UI.

Also, although the entry/exit management device 203A and the monitoring device 203B are illustrated as examples in the first embodiment, the present disclosure is not limited to these examples. According to the present disclosure, a person to be a subject of face authentication can set a consent condition in advance for all face authentication services that can be used by the person. The application example of the UI in FIG. 4 is not limited to an entry/exit management device and a monitoring system. Below, an example will be described in which a person sets a consent condition for a payment function.

The item 401 is an item by which a person to be a subject of face authentication can set a consent condition regarding a payment function. For example, if a person to be a subject of face authentication consents to all payment functions, there is no need to individually perform consent procedures for various payment functions. Also, security can be improved by limiting the effective period of consent by a person to be a subject of face authentication. Also, a person to be a subject of face authentication can easily show an intention of consent by pressing a button on the UI.

The items 402 and 403 are setting items by which a guardian of a lost child can set a consent condition in a face authentication system for searching for a lost child. For example, by selecting the check box in the item 403, the guardian can permit the acquisition and use of a child's face image or face feature amount for only the period in which the child is lost. The guardian can also select the radio button "all locations" in the "permitted locations" section to permit face authentication for the child at all locations during the period in which the child is lost. Also, from the perspective of risk management, a written consent is issued.

The items 404 and 405 are items via which an employee can set a consent condition in an employee face authentication system implemented by a company. For example, a person to be a subject of face authentication sets "during work hours" as the consent period for face authentication. Therefore, when a person to be a subject of face authentication (here, an employee) changes their job location due to an internal change in job location, a temporary transfer, or a change in job, it is not necessary to re-set a consent condition for the acquisition and use of face images. For example, as shown in FIG. 4, a person to be a subject of face authentication can select a method of consent by signature (method of consent: signature on document printed at job location).

Here, the face authentication services with settable setting items (i.e., consent conditions) are not limited to the above examples. For example, the consent condition registration unit 301 may present setting items related to a recommendation system for presenting recommended products to individuals. Also, the consent condition registration unit 301 may present setting items related to identity verification by face authentication.

The content of the setting items is not limited to the examples described above. The content of the setting items may include, for example, an item for designating a time frame in which the person consents to face authentication, and an item for inputting the maximum payment amount of the payment function.

The method of inputting setting items is not limited to the method described above. Other examples of input methods include a combo box, multi-select, and toggle switches.

The content of the setting items and the input method are not limited to the examples described above, and it is possible to use any content and input method that can be quantitatively set and is technically feasible in a face authentication system.

A face image registration method 406 is a method of registering a face image for face authentication. Here, a person to be a subject of face authentication uploads their face image data stored in advance in the mobile terminal device 201. Also, as described in the description of the items 402 and 403, in the case of a child's face image, the guardian uploads the child's face image in place of the child. Here, the face image registration method is not limited to the above example. For example, the mobile terminal device 201 may capture a face image of the subject on the spot. The present disclosure is not limited to these methods, and it is possible to use any method that can acquire a face image that can be used for face authentication.

A consent acquisition method 407 is a method of acquiring consent for face authentication from a person to be a subject of face authentication. Here, a consent button (illustrated as the consent acquisition method 407) is presented to the person to be a subject of face authentication. By pressing the consent button, the person to be a subject of face authentication can express their intention to consent to the execution of face authentication under the set (input) consent condition.

The consent acquisition method is not limited to the above example. For example, consent may be acquired by allowing the person to sign a touch panel with a finger. It is also possible to double check the person's intention to consent by displaying a confirmation screen again after the person has pressed the consent button. Also, the person's consent may be separately acquired as described in the item 404. Alternatively, an electronic signature may be used in the item 404. Alternatively, the person's consent may be acquired by different consent acquisition methods for each item. The consent acquisition method is not limited to these examples, and it is possible to use any method that enables a person to understand the consent content and voluntarily consent.

The UI displayed by the consent condition registration unit 301 of the mobile terminal device 201 is not limited these examples, and it is possible to use any screen display and operation method that enables setting a consent condition in detail or any consenting unit.

### (Data Structure)

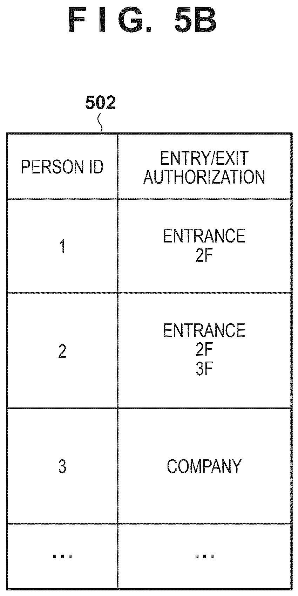

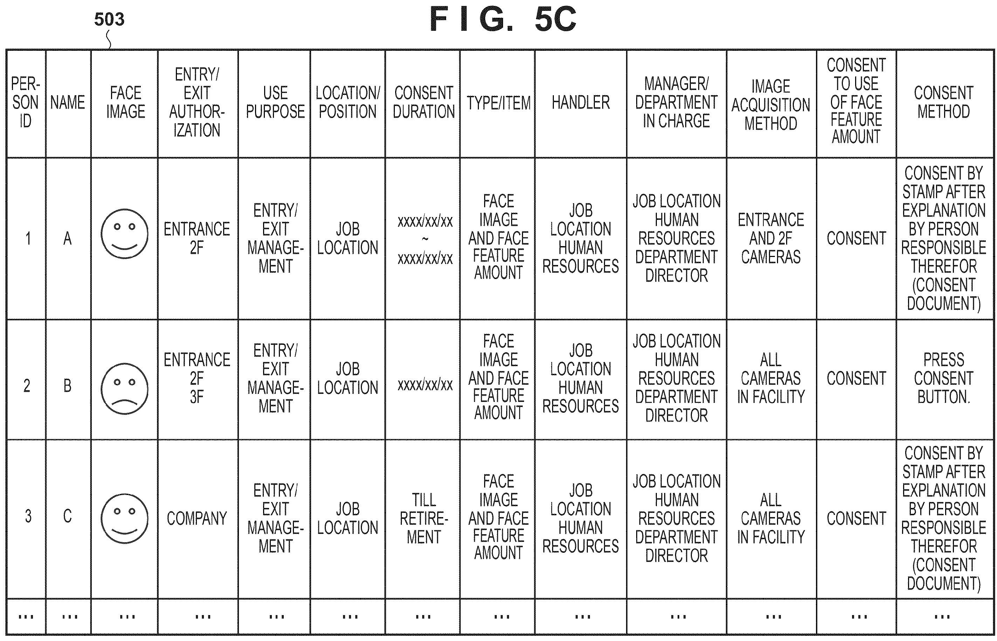

FIGS. 5A to 5C show an example of a data structure according to the first embodiment. More specifically, FIG. 5A is a diagram illustrating data managed by the server device according to the first embodiment. FIG. 5B is a diagram illustrating data 502 stored in the entry/exit management device according to the first embodiment. FIG. 5C is a diagram illustrating data 503 obtained by combining data 501 and the data 502 according to the first embodiment.

The following describes an overview of the data 501 shown in FIG. 5A. The data 501 is data managed by the consent management unit 302 of the server device 202 and includes consent conditions and face images corresponding to a plurality of persons. When a person to be a subject of face authentication registers a new consent condition or changes an existing consent condition, the table-formatted data 501 is updated. The consent management unit 302 assigns a unique person ID to each individual and manages the consent conditions and the face images of a plurality of persons in association with the person IDs. Therefore, based on a person ID, it is possible to appropriately refer to the data associated with that person ID.

The first row in FIG. 5A indicates the names of items constituting the data 501. The item names include a person ID, a registered face image, a consent condition, metadata, and the like. As described in the description at the beginning of the first embodiment, the consent condition here includes the purpose of use, the use/storage period, the type of data (face image or face feature amount), the face image acquisition method, and the like. The metadata includes the handler, the manager, and the department in charge. For example, the second to fourth rows in the data 501 show consent conditions and metadata set by persons to be subjects of face authentication using the UI shown in FIG. 4. Also, as described in the description of the UI in FIG. 4, there are cases where a guardian registers a consent condition for a child in place of the child. In the data 501, the person ID of a person who actually performed registration using the UI of FIG. 4 is displayed as "A", and a child's person ID is displayed as "a".

The data 501 may further include, for example, an age, a sex, and an e-mail address in addition to the item names described above. The data 501 may further include the date/time and location at which the consent of the person was obtained. The data 501 may further have an electronic signature which guarantees that spoofing has not occurred. The item names need only have information necessary for operating the system based on the consent condition, and the information is not limited to any specific information.

The following describes an overview of the data 502 shown in FIG. 5B. The data 502 is data stored in the recording unit 305 by the system setting unit 304 shown in FIG. 3A and includes the person IDs of all persons permitted to enter/exit the entry/exit gate 312 and information associated with the person IDs. Also, the data 502 applied in FIG. 3B includes all the person IDs to be monitored and information associated with such person IDs.

The following describes an overview of the data 503 in FIG. 5C. The data 503 is data obtained by combining the data 501 and the data 502. The data 503 applied in FIG. 3A is data obtained by combining consent conditions and registered face images regarding entry/exit management in the data 501 and entry/exit authorization information in the data 502. The data 503 applied in FIG. 3B is data obtained by combining consent conditions regarding monitoring and registered face images in the data 501 and monitoring purpose information in the data 502. The data 501 and the data 502 are combined by associating piece of data corresponding to the same person ID with each other.

### (Processing Flowchart)

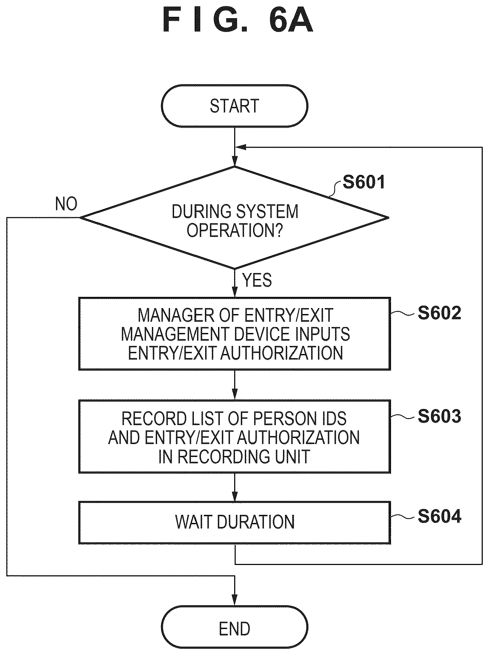

FIG. 6A is a flowchart illustrating entry/exit authorization setting processing performed by the entry/exit management device according to the first embodiment. Note that the processing shown in FIG. 6A is realized by the CPU 101a of the entry/exit management device 203A (information processing apparatus 101) executing a control program in the ROM 101c.

Steps S601 to S604 are processing in which the manager of the entry/exit management device 203A sets entry/exit authorization for all persons permitted to enter and exit.

In step S601, the entry/exit management device 203A makes a system end determination. If it becomes difficult for the system to continue for some reason, or a system stop command has been issued (NO in step S601), the entry/exit management device 203A stops the system. On the other hand, if the entry/exit management device 203A has not detected an abnormality in the system (YES in step S601), the processing moves to step S602.

In step S602, the manager of the entry/exit management device 203A inputs entry/exit authorization information for all persons permitted to enter and exit to the system setting unit 304.

In step S603, the system setting unit 304 records the data input by the manager in step S602 in the recording unit 305. The data recorded here is in the format of the data 502.

In step S604, the system setting unit 304 waits for a preset time until the next input is received.

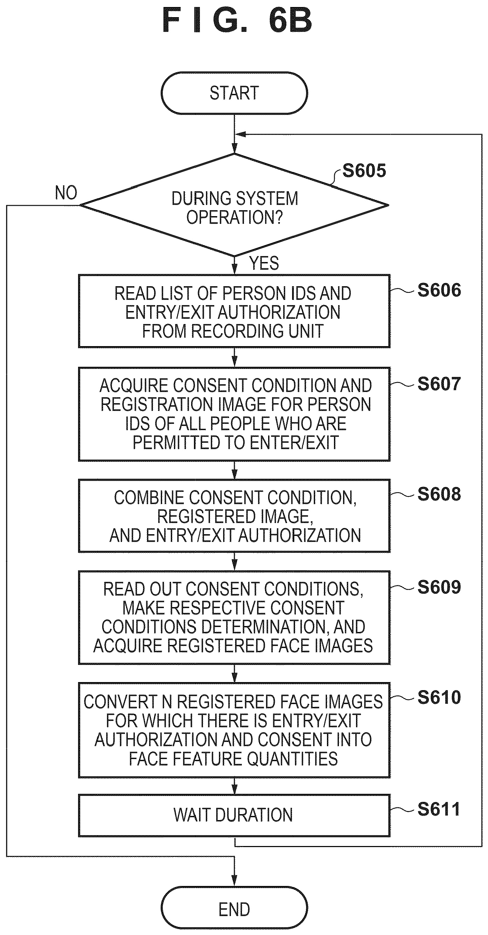

FIG. 6B is a flowchart illustrating registered face feature amount acquisition processing performed by the entry/exit management device according to the first embodiment. Note that the processing of FIG. 6B is realized by the CPU 101a of the entry/exit management device 203A (information processing apparatus 101) executing a control program in the ROM 101c.

Steps S605 to S611 are processing for acquiring a registered face image of a person who consented to the acquisition and use of a face image or a face feature amount, and converting the registered face image into a registered face feature amount.

In step S605, the entry/exit management device 203A makes a system end determination. If it becomes difficult for the system to continue for some reason, or a system stop command has been issued (NO in step S605), the entry/exit management device 203A stops the system. On the other hand, if the entry/exit management device 203A has not detected an abnormality in the system (YES in step S605), the processing moves to step S606.

In step S606, the consent condition inquiry unit 303 reads a list of the person IDs and entry/exit authorization of all persons recorded in the data 502 from the recording unit 305. The consent condition inquiry unit 303 then determines, based on the acquired list of entry/exit authorization, whether entry/exit is permitted by the entry/exit management device 203A for all persons. The consent condition inquiry unit 303 extracts the person IDs of all persons permitted to enter/exit.

In step S607, the consent condition inquiry unit 303 acquires the corresponding consent conditions and registered face images for the person IDs of all the persons permitted to enter/exit acquired in step S606.

More specifically, the consent condition inquiry unit 303 transmits the person IDs of all persons permitted to enter/exit to the consent management unit 302. The consent management unit 302 extracts all pieces of data that correspond to the person IDs of all persons permitted to enter/exit from the data 501.

Next, the consent management unit 302 further extracts pieces of data related to entry/exit management from the extracted data. The consent management unit 302 transmits the extracted data to the consent condition inquiry unit 303. Finally, the consent condition inquiry unit 303 stores the acquired data in the recording unit 305.

In step S608, the consent condition determination unit 307 acquires the data 503 (see FIG. 5C).

More specifically, the consent condition determination unit 307 acquires, from the recording unit 305, the data 502 acquired in step S606 and the data extracted from the data 501 in step S607. The consent condition determination unit 307 acquires the data 503 by combining elements having the same person ID in two pieces of data (the data 502 and the data extracted from the data 501). Lastly, the consent condition determination unit 307 stores the data 503 in the recording unit 305.

In step S609, the consent condition determination unit 307 acquires registered face images of all persons who permitted the acquisition and use of a face image or a face feature amount from the data 503 acquired in step S608.

More specifically, for the consent conditions of all persons in the data 503, the consent condition determination unit 307 determines whether there is any contradiction with the purpose of use and the period of use of the consent condition. If there is no contradiction with the purpose of use and the period of use of the consent condition for a person, the consent condition determination unit 307 extracts the registered face image of that person for which there is no contradiction with the purpose of use and the period of use of the consent condition. If there is a contradiction with the purpose of use or the period of use of the consent condition for a person, the consent condition determination unit 307 deletes, from the recording unit 305, the data corresponding to that person for which there is a contradiction with the purpose of use or the period of use of the consent condition. The consent condition determination unit 307 acquires the registered face images of all persons for which there is no contradiction with the purpose of use and the period of use of the consent condition.

In step S610, the face authentication unit 308 converts all the registered face images extracted in step S609 into face feature amounts. As a result, "registered face feature amounts" are obtained.

In step S611, the system waits for a preset time.

The processing of steps S605 to S611 is periodically repeated to continuously update the registered face feature amounts of the face authentication unit 308.

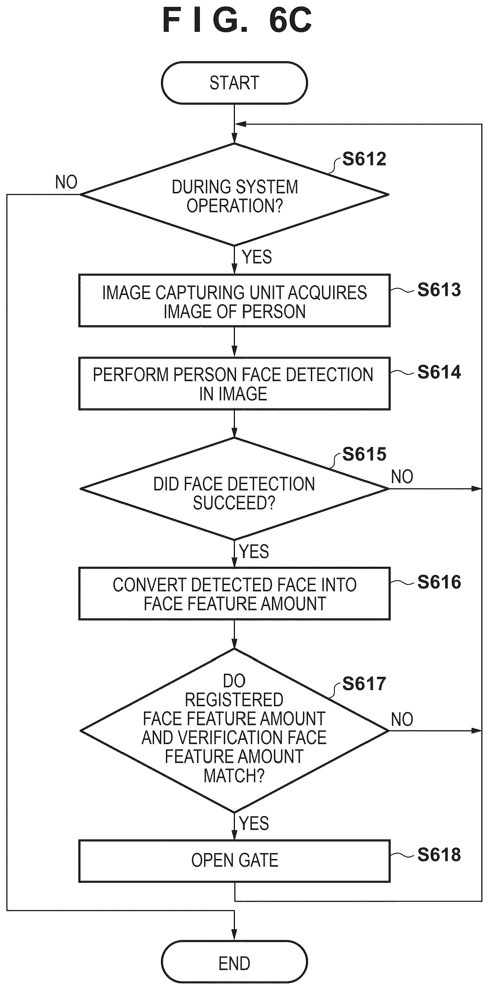

FIG. 6C is a flowchart illustrating processing by which the entry/exit management device controls the entry/exit gates, according to the first embodiment. Note that the processing of FIG. 6C is realized by the CPU 101a of the entry/exit management device 203A (information processing apparatus 101) executing a control program in the ROM 101c.

Steps S612 to S618 include processing for identifying, from among registered face images, the person shown in an image acquired by the image capturing unit 310, and processing for controlling the entry/exit gate 312.

In step S612, the entry/exit management device 203A makes a system end determination. If it becomes difficult for the system to continue for some reason, or a system stop command has been issued (NO in step S612), the entry/exit management device 203A stops the system. On the other hand, if the entry/exit management device 203A has not detected an abnormality in the system (YES in step S612), the processing moves to step S613.

In step S613, the image capturing unit 310 acquires an image of a person.

In step S614, the face detection unit 309 detects a face region of the person in the image acquired by the image capturing unit 310.

In step S615, the face detection unit 309 determines whether a face region could be detected in step S614. If a face region could be detected (YES in step S615), the face detection unit 309 moves to the processing of step S616. On the other hand, if a face region could not be detected (NO in step S615), the face detection unit 309 returns to the processing of step S612, and the image capturing unit 310 acquires an image again.

In step S616, the face authentication unit 308 converts the face region detected in step S614 into a face feature amount.

Thus, a "verification face feature amount" is obtained.

In step S617, the face authentication unit 308 specifies the person ID of the person detected by the face detection unit 309 in step S614, by comparing the registered face feature amount acquired in step S610 with the verification face feature amount acquired in step S616. If the person ID could be specified (YES in step S617), the face authentication unit 308 moves to the processing of step S618. If the person ID could not be specified (NO in step S617), the face authentication unit 308 returns to the processing of step S612, and the image capturing unit 310 acquires an image again.

In step S618, the gate control unit 311 opens a entry/exit gate 312 by controlling the entry/exit gate 312.

The processing returns to step S612, and face authentication is performed while the system is operating.

The basic processing procedure in the monitoring device 203B is similar to that in the above-described entry/exit management device 203A. The following is a supplementary description of processing executed by the monitoring device 203B.

In steps S602 and S603 in FIG. 6A, the manager inputs a monitoring list of all persons who have permitted monitoring to the system setting unit 304. The system setting unit 304 stores, in the recording unit 305, the person ID of the monitoring target and information associated with the person ID.

In steps S606 to S610 in FIG. 6B, the monitoring device 203B acquires a consent condition and a registered face feature amount. The monitoring device 203B assigns person IDs to all persons to be monitored, similarly to the case of the entry/exit management device 203A. Therefore, using a procedure similar to that of the entry/exit management device 203A, the monitoring device 203B can make an inquiry to the consent management unit 302 of the server device 202 using the person ID.

In steps S613 to S617 in FIG. 6C, the monitoring device 203B performs processing from the acquisition of a verification image to the comparison of feature amounts. The monitoring device 203B includes a plurality of image capturing units 310 (a plurality of image capturing devices) as illustrated in FIG. 3B. However, the monitoring device 203B transmits the images acquired by the image capturing units 310 one by one to the face detection unit 309. Accordingly, similarly to the case described in the processing of the entry/exit management device 203A, face images can be compared one by one.

If a person ID could be specified, the monitoring device 203B executes processing different from the processing performed by the entry/exit management device 203A. Specifically, the monitoring device 203B notifies the installation position of the image capturing device that captured the image of the person. Specifically, the person monitoring unit 314 controls the notification unit 315 to notify the system manager of the installation position of the image capturing unit 310 (image capturing device) that captured the image of the person.

### (Effects)

According to the face authentication system described above, a user of a facility (i.e., a person to be a subject of face authentication) can set in advance an intention to consent to an application and use condition of a face image or a face feature amount. Accordingly, the user of the facility can permit the acquisition and use of the face image and the face feature amount only when necessary. Also, the user of the facility does not need repeatedly perform the consent procedure with a plurality of face authentication apparatuses in the facility. Also, by widening the range of consent set by the user of the facility to other facilities, the user of the facility does not have to repeatedly perform the consent procedure at facilities at other locations.

### (Variations of First Embodiment)

In the first embodiment, an example is described in which the entry/exit management device 203A has one entry/exit gate 312, but the present disclosure is not limited to this, and a plurality of entry/exit gates 312 may be provided. Also, a plurality of entry/exit gates 312 may be connected so as to be able to communicate with each other via a network. The number of entry/exit management devices 203A and the number of monitoring devices 203B are not limited to one, and there may be more than one of each.

Furthermore, the face authentication system according to the present disclosure is not limited to including the entry/exit management device 203A and the monitoring device 203B. For example, the face authentication system may include an electronic payment apparatus and an identity verification system. Also, the face authentication system may be a face authentication system provided by a local government in a public institution, or a face authentication function provided by an individual digital camera, for example.

In the first embodiment, an example is described in which a consent condition regarding the acquisition and use of a face image or a face feature amount is set. However, the consent condition is not limited to a consent condition regarding the acquisition and use of a face image or a face feature amount. The content for which the consent condition is set may include, for example, personal information such as an address, an age, and a gender, and biometric information such as a fingerprint, iris information, or vein information. In this way, there are no limitations on the content for which the consent condition is set as long as it is information that requires consent to the acquisition and use of some sort of information held by a person.

### Second Embodiment

In the first embodiment, it is necessary for a person to set, input, and register a consent condition regarding the acquisition and use of a face image or a face feature amount in advance. If the person has not registered a consent condition in advance, the person to be a subject of face authentication needs to redundantly set the consent condition using a burdensome method.

Accordingly, a second embodiment illustrates an example of a face authentication system in which, when a person to be a subject of face authentication has not registered a consent condition in advance, a consent condition for the person is predicted and presented on the spot, and consent is obtained from the person. The face authentication system according to the second embodiment predicts and presents a consent condition having a high probability of being consented to by a person. As a result, as compared with the case where all conceivable consent conditions are presented and selected from among by the person on the spot, the burden pertaining to the selection of a consent conditions by the person can be reduced.

Also, if a consent condition that is clearly unnecessary for a person is obtained (e.g., even if a person makes an input mistake), a problem may arise in terms of privacy depending on the country or region. To address this, the second embodiment has an effect of preventing problems related to privacy by predicting an appropriate consent condition to be presented to the person.

Also, at an event venue in which a plurality of consent conditions need to be acquired, it may take a long time to obtain the consent conditions using a conventional redundant method. In order to handle such a use case, the second embodiment presents a minimum required consent condition using a simple expression. Accordingly, consent conditions for a plurality of persons can be obtained in a shorter time than in the case of using a conventional redundant method. As a result, it is possible not only to reduce the burden pertaining to the selection of a consent condition for a person to be subject to face authentication, but also to reduce the amount of effort required of an event operator when obtaining consent conditions for a plurality of persons. In the second embodiment, differences from the first embodiment will be described.

### (System Configuration)

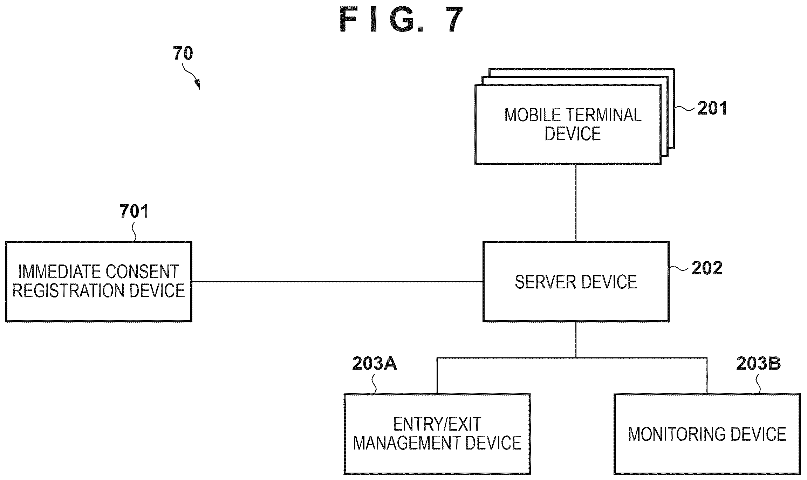

FIG. 7 is a diagram illustrating an overview of a system configuration according to the second embodiment. The following describes an overview of handling a situation in which a person has not set a consent condition in advance in a system 70 that, similarly to the first embodiment, includes the entry/exit management device 203A and the monitoring device 203B. The system 70 is a biometric authentication system that performs biometric authentication on a person, and is, for example, a face authentication system. In this case, system blocks assigned the same reference numerals as those in the first embodiment are the same system blocks.

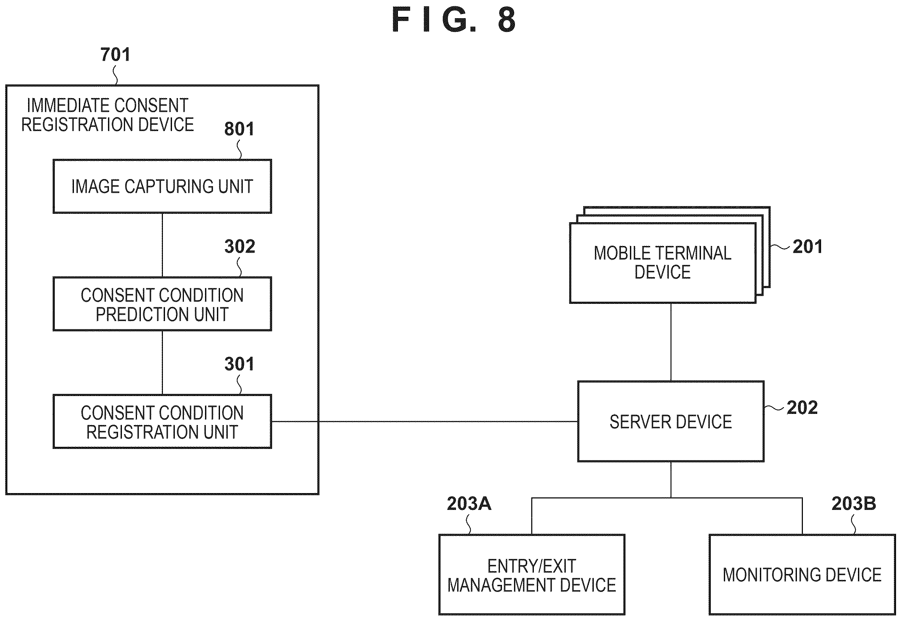

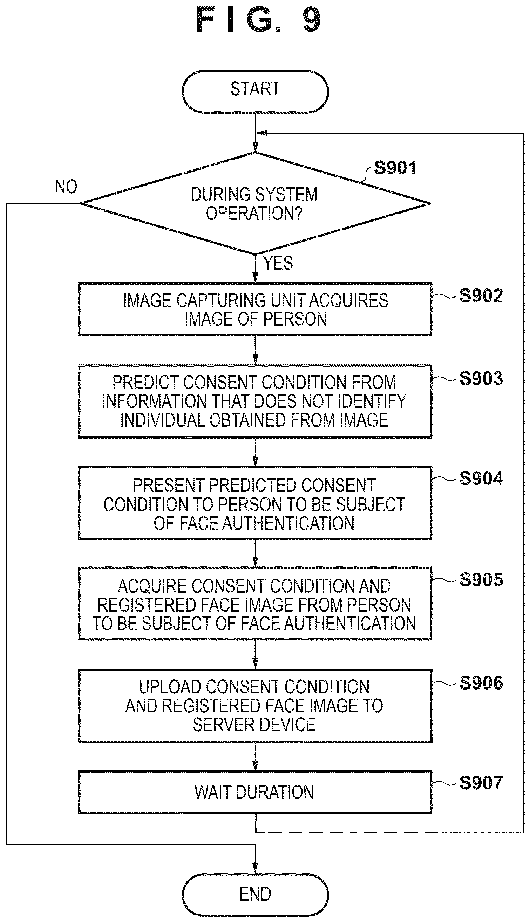

If a person to be a subject of face authentication has not set a consent condition in advance, the immediate consent registration device 701 shown in FIG. 7 acquires a consent condition and a registered face image from the person on the spot. The input device of the immediate consent registration device 701 (the input device 102 shown in FIG. 1) includes an image capturing device, a key input device, and a pointing device. The output device of the immediate consent registration device 701 (the output device 103 in FIG. 1) is a display device. The immediate consent registration device 701 is installed at the entrance of a company or a large commercial facility. The immediate consent registration device 701 prompts a person for whom a consent condition has not been set in advance to set a consent condition. The detailed functions of the immediate consent registration device 701 will be described below with reference to FIGS. 8 and 9.

### (Functional Configuration)

FIG. 8 is a diagram illustrating the functional configuration of the immediate consent registration device according to the second embodiment. The immediate consent registration device 701 predicts and presents a consent condition regarding the acquisition and use of a face image or a face feature amount to a person on the spot. The immediate consent registration device 701 obtains consent from the person to be a subject of face authentication. The immediate consent registration device 701 includes an image capturing unit 801, a consent condition prediction unit 802, and the consent condition registration unit 301 described with reference to FIGS. 3A and 3B. The consent condition registration unit 301 of the immediate consent registration device 701 is another consent condition registering unit for registering a consent condition regarding the acquisition and use of a person's biometric information. The consent condition registration unit 301 of the immediate consent registration device 701 has a function different from that of the consent condition registration unit 301 of the mobile terminal device 201.

The image capturing unit 801 is an image capturing device that acquires an image of a person to be a subject of face authentication. Here, the image capturing unit 801 is a surveillance camera. The image capturing unit 801 acquires a moving image. The image capturing unit 801 transmits frames (one image at a time) to the consent condition prediction unit 802 as image data.

The consent condition prediction unit 802 is a consent condition predicting unit that predicts a consent condition regarding the acquisition and use of person's biometric information based on at least one of an attribute, a physical characteristic, a behavior, and associated information of the person. The consent condition prediction unit 802 predicts a consent condition of the person regarding the acquisition and use of a face image or a face feature amount using an image acquired from the image capturing unit 801. The consent condition prediction unit 802 uses a face authentication image of the person to predict a consent condition that is appropriate for the situation, for presentation to the person.

An appropriate consent condition is a consent condition that has a high possibility of being consented to by the person to which the consent condition is presented, and also needs to be consented to by the person. If a consent condition for searching for a lost child as exemplified in the first embodiment is presented to a person (here, one adult), there is a low possibility that the person will consent to the consent condition for searching for a lost child. Even if a person (here, one adult) consents to the consent condition for searching for a lost child, that person will not use the function of searching for a lost child.

On the other hand, a family with a young child has a higher possibility of consenting to a consent condition for searching for a lost child. It is possible that such a family will actually use the lost child search function.

If a consent condition that is required by a person to be a subject of face authentication is presented with priority to that person, it is possible to reduce the burden on the person regarding consenting to the consent condition.

In order to predict a consent condition that is appropriate for the situation of the person, the immediate consent registration device 701 uses an image to predict an appropriate consent condition. Specifically, the immediate consent registration device 701 uses a neural network capable of inferring the age of the subject from an image. In the case of a group (family) that includes a child, the immediate consent registration device 701 predicts that the function of searching for a lost child described in the first embodiment is necessary. On the other hand, in the case of a group (family) that does not include a child, the immediate consent registration device 701 predicts that the function of searching for a lost child is not necessary.

As described in the first embodiment, the consent condition registration unit 301 acquires a consent condition and a face image from a person to be a subject of face authentication, and registers the acquired consent condition and face image in the consent management unit 302.

The consent condition registration unit 301 presents a consent condition based on the prediction made by the consent condition prediction unit 802. The consent condition is presented using the UI presentation method shown in FIG. 4, similarly to the first embodiment. Here, in the case of a group (family) that includes a child, the consent condition registration unit 301 displays an item regarding the lost child search function in the UI. On the other hand, in the case of a group including only adults, the consent condition registration unit 301 does not display an item regarding the lost child search function in the UI. The person to be a subject of face authentication may make changes to the consent condition presented in the UI. The person can make changes to the consent condition using, for example, a keyboard and a touch panel.

### (UI: User Interface)

The UI presented by the consent condition registration unit 301 of the immediate consent registration device 701 is similar to the UI shown in FIG. 4. The consent condition content presented in the UI includes consent condition content regarding the acquisition and use of person's biometric information, which is predicted based on non personally identifiable information obtained from a person's biometric information.

### (Processing Flowchart)

FIG. 9 is a flowchart illustrating processing executed by the immediate consent registration device according to the second embodiment. The processing procedure shown here is processing by which the immediate consent registration device 701 performs immediate registration of a consent condition. Note that the processing shown in FIG. 9 is realized by the CPU 101a of the immediate consent registration device 701 (information processing apparatus 101) executing a control program in the ROM 101c.

In step S901, the immediate consent registration device 701 makes a system end determination. If it becomes difficult for the system to continue for some reason, or a system stop command has been issued (NO in step S901), the immediate consent registration device 701 stops the system. On the other hand, if the immediate consent registration device 701 has not detected an abnormality in the system (YES in step S901), the processing moves to step S902.

In step S902, the image capturing unit 801 acquires an image of a person to be a subject of face authentication (hereinafter, "the person").

In step S903, the consent condition prediction unit 802 predicts a consent condition to be presented to the person, using the image acquired by the image capturing unit 801. More specifically, the consent condition prediction unit 802 predicts a consent condition to be presented to the person, using information not capable of identifying the person, which is obtained from the image acquired by the image capturing unit 801 (non-personally identifiable information).

In step S904, the consent condition registration unit 301 presents the consent condition predicted by the consent condition prediction unit 802 in step S903 to the person via a UI (FIG. 4).

In step S905, the consent condition registration unit 301 acquires the consent condition and a registered face image of the person.

In step S906, the consent condition registration unit 301 uploads the consent condition and the registered face image of the person acquired in step S905 to the server device 202.

In step S907, the immediate consent registration device 701 waits for a preset time until the next input is accepted.

After the processing of FIG. 9 is completed, processing is executed by the entry/exit management device 203A and the monitoring device 203B, but such processing is similar to that described in the first embodiment and therefore will not be described here.

### (Effects)

According to the second embodiment, if a person to be a subject of face authentication has not registered a consent condition in advance, an appropriate consent condition can be predicted and presented to the person on the spot. This makes it possible to easily acquire a consent condition from a person to be a subject of face authentication.

Compared to the case where the person to be a subject of face authentication is presented with all conceivable consent conditions on the spot and caused to make a selection, the face authentication system according to the second embodiment can reduce the burden on the person regarding consenting to the consent condition. As described at the beginning of the second embodiment, if a consent condition that is clearly unnecessary for a person to be a subject of face authentication is obtained (e.g., even if a person to be a subject of face authentication makes an input mistake), a problem may arise in terms of privacy depending on the country or region. According to the second embodiment, in order to address such a privacy problem, an appropriate consent condition is predicted and presented to the person, thus making it possible to avoid problems related to privacy.

### (Variations of Second Embodiment)

In the second embodiment, an example is described in which it is predicted whether a function of searching for a lost child is necessary before consent conditions are presented to a person, but the present disclosure is not limited to this example. For example, the entry/exit management device 203A may have an entry/exit gate as in the first embodiment. Also, the entry/exit management device 203A may have a plurality of entry/exit gates. Also, a plurality of entry/exit gates may be connected so as to be able to communicate with each other via a network. The number of entry/exit management devices 203A and the number of monitoring devices 203B are not limited to one, and there may be more than one of each. Furthermore, the face authentication system according to the present disclosure is not limited to including the entry/exit management device 203A and the monitoring device 203B. For example, the face authentication system may include an electronic payment apparatus and an identity verification system. The face authentication system may also be a face authentication system provided by a local government or public institution.

### (Variations of Method of Predicting Appropriate Consent Condition)

In the second embodiment, a consent condition for a lost child search is presented to a group (family) that includes a child, using a neural network capable of inferring the age of the subject from an image.

Although a consent condition for a group (family) including a child is predicted from an image here, the present disclosure is not limited to this, and it is only necessary that a prediction is made using non personally identifiable information from the point of view of privacy. First, personally identifiable information is information that can identify who an individual is on its own or in combination with other information. Personally identifiable information includes biometric information such as fingerprints, vein information, iris information, and face images.

On the other hand, it is also possible to predict a consent condition using information that cannot identify who an individual is. Information that cannot identify who an individual is includes, for example, height, weight, age, gender, walking style, clothing, and facial expressions. When inferring information that cannot identify who a person is, for example, images may be acquired from a plurality of surveillance cameras, and a height or behavior may be inferred by triangulation. It is also possible to provide an information processing terminal that enables manually inputting information that cannot identify who a person is. A person to be a subject of face authentication may be allowed to input information that cannot identify who a person is via the information processing terminal on the spot. It is also possible to use a neural network capable of inferring information that cannot identify who a person is from an image. Alternatively, the height and physique of a person may be obtained by using a neural network capable of inferring three-dimensional positions of a person from an image.

Also, information that cannot identify who a person is may be inferred using a combination of the above-described inferring methods (neural networks). There is no limitation to these inferring techniques, and it is only required that it is possible to infer information that cannot identify who a person is.

The immediate consent registration device 701 according to the second embodiment determines whether a lost child search system is required based on the age of a person to be a subject of face authentication, and determines whether a consent condition related to the lost child search system is to be displayed. However, there is no limitation to using age as the prediction reference for predicting an appropriate consent condition to be presented to the person. The immediate consent registration device 701 can predict a consent condition by using an attribute, a physical characteristic, a behavior, or associated information regarding a person. The follow are examples in the case where the immediate consent registration device 701 is installed at the entrance of a station, a hospital, or a commercial facility, and predicts a consent condition.

### (Attributes)

Minor persons are subject to the precondition that they cannot use a payment function associated with an account and a credit card. The immediate consent registration device 701 infers the age of a person to be a subject of face authentication and does not present a consent condition related to a payment function to minor persons. Here, the attribute of the person to be inferred is not limited to their age. For example, the immediate consent registration device 701 may infer the gender and/or race of a person and determine a consent condition to be presented to the person.

### (Physical Characteristics)

The immediate consent registration device 701 may present a consent condition related to a guidance service that guides a mobility-impaired person who uses a wheelchair or a cane to a more easily traversable route (a barrier-free route). The immediate consent registration device 701 performs recognition using an image acquired from a pre-installed surveillance camera, and detects/determines a mobility-impaired person who uses a wheelchair or a cane. The immediate consent registration device 701 also presents a consent condition related to face authentication in connection with a guidance service, to the mobility-impaired person. The guidance service may be provided using, for example, and audio guidance device and a surveillance camera installed at an appropriate location in advance at a facility. Only upon detecting a specified person who has consented in advance, the audio guidance device of the guidance service guides the specified person to a slope and/or an elevator. The physical characteristic to be inferred here is not limited to a wheelchair and/or a cane. For example, the immediate consent registration device 701 may infer at least any of a white cane, a hearing aid, an eye patch, eyeglasses, height, and weight, and determine a consent condition to be presented to the person.

### (Behaviors)

The immediate consent registration device 701 may determine that a person who is hiding their face is a person sensitive to the handling of their personal information, and may present only a minimum-required consent condition regarding a payment function. Here, the behavior of the person inferred by the immediate consent registration device 701 is not limited to a behavior of hiding their face. For example, the immediate consent registration device 701 may determine a consent condition to be presented to a person by inferring at least either restlessly moving back and forth or performing a specific gesture.

### (Associated Information)

Upon detecting a person wearing a mark indicating requiring the assistance of others, the immediate consent registration device 701 may present a consent condition regarding a watch-over service that uses face authentication. Marks indicating requiring assistance from others include, for example, a "Help Mark" and a "Maternity Mark". The immediate consent registration device 701 detects a mark indicating requiring assistance from others by recognizing an image acquired from a surveillance camera installed in advance. In order to provide a watch-over service, the immediate consent registration device 701 presents a consent condition regarding the execution of face authentication to the wearer who has the mark indicating requiring assistance from others. The watch-over service is a service for assisting people who need assistance from others. The immediate consent registration device 701 acquires an image of a person from a surveillance camera installed at a station or a hospital, and determines an impaired physical condition of the person by inferring the posture of the person.

Upon detecting the impaired physical condition of the person, the immediate consent registration device 701 identifies the individual by face authentication. In the case of a person whose is gravely impaired, the immediate consent registration device 701 promptly establishes contact with an emergency contact or requests emergency transportation. The associated information inferred by the immediate consent registration device 701 is not limited to a mark indicating requiring assistance from others. For example, the immediate consent registration device 701 may determine a consent condition to be presented to a person by inferring a situation around the person, such as an accompanying person, a guide dog, or a possession.

As a result, it is possible to perform face authentication on only persons who have consented to using a service at a train station, a hospital, or a commercial facility. Note that the prediction of a consent condition to be presented to a person is not limited to this. For example, a neural network capable of directly inferring an appropriate consent condition from an image may be used to predict a consent condition to be presented to a person. Alternatively, a consent condition to be presented to a person may be predicted by using a combination of the above inferring methods. The references for predicting a consent condition are not limited to these examples, and it is only necessary that the method can predict a consent condition that has a high possibility of being consented to by a person to be a subject of face authentication, and also needs to be consented to by the person.

### (Additional Use of Non-image Information)

Envision the case where a person presents a two-dimensional bar code ticket when entering an event venue. In this case, information regarding the person (user) can be acquired by a means other than image identification. A consent condition to be presented to the user may be determined using information regarding the person acquired by such a method. Examples of information regarding a person that is acquired without using image identification include the date/time of visit, the time period, the location, the content of the event, the number of visitors, and the weather. Such information can be used to predict the situation around the person.

### (Consent to Use of Non-face Biometric Information)

In the second embodiment, an example is illustrated regarding setting a consent condition regarding the acquisition and use of a face image or a face feature amount. However, the consent condition is not limited to a consent condition regarding the acquisition and use of a face image or a face feature amount. The content for which the consent condition is set may include, for example, personal information such as an address, an age, and a gender, and biometric information such as a fingerprint, iris information, or vein information. In this way, there are no limitations on the content for which the consent condition is set as long as it is information that requires consent to the acquisition and use of some sort of information held by a person.

### (Presentation of Multiple Consent Conditions)

In the second embodiment, an aspect is described in which a consent condition inferred to be appropriate for presentation to a person is presented to the person (user), and the person is allowed to determine whether or not to consent, and the person is allowed to make changes regarding an item not consented to. Examples of UI elements for making changes to items include check boxes and radio buttons, as shown in FIG. 4. On the other hand, a simpler method of consent is conceivable in which consent condition candidates are presented to a person using sentences or the like, and the person is allowed to select only one candidate from among the candidates. One example of such a method is an aspect in which three options are presented to the person as described below.
Consent condition candidate 1: consent to a payment service that uses a face feature amount (face feature amount is deleted immediately after payment is completed)
Consent condition candidate 2: consent to a lost child search service that uses a face feature amount (face feature amount is deleted after the subject is found or after 24 hours)
Other: present other consent condition candidates

In this way, the method of presenting consent conditions to be presented to a person can include aspects other than that shown in FIG. 4.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A biometric authentication apparatus (101, 203A, 203B) comprising:
an acquiring means (303) configured to acquire a condition for consent regarding acquisition and use of biometric information of a person; and
a biometric authentication means (308) configured to perform biometric authentication on the person based on the condition for consent.

2. The biometric authentication apparatus according to claim 1 further comprising a consent condition determination means (307) configured to determine based on the condition for consent whether acquisition and use of the biometric information of the person is permitted,
wherein the biometric authentication means performs the biometric authentication on the person in a case where acquisition and use of the biometric information of the person was determined to be permitted.

3. The biometric authentication apparatus according to claim 2,
wherein the consent condition determination means determines whether acquisition and use of the biometric information of the person is permitted, based on whether a contradicting item is included in the condition for consent.

4. The biometric authentication apparatus according to claim 1,
wherein the condition for consent indicates that the person permits acquisition and use of the biometric information of the person.

5. The biometric authentication apparatus according to claim 1,
wherein the condition for consent includes at least any of a purpose of use, a period of use, a period of storage, a biometric information type, a handler, a manager, a department in charge, and an acquisition method regarding acquisition and use of the biometric information of the person.

6. The biometric authentication apparatus according to claim 1,
wherein the condition for consent includes at least any of a condition for consent registered by the person in advance and a condition for consent predicted based on non-personally identifiable information obtained from the biometric information of the person.

7. The biometric authentication apparatus according to claim 1,
wherein the acquiring means acquires the condition for consent regarding acquisition and use of the biometric information of the person from a server device capable of performing communication with the biometric authentication apparatus.

8. The biometric authentication apparatus according to claim 1,
wherein the biometric authentication apparatus is for entry/exit management or for monitoring.

9. The biometric authentication apparatus according to claim 1,
wherein the biometric information includes at least any of a face image of the person and a face feature amount of the person, and
the biometric authentication is face authentication.

10. The biometric authentication apparatus according to claim 1,
wherein the condition for consent is associated with a person ID unique for each person.

11. A biometric authentication system (20) comprising:
a mobile terminal device (201) including consent condition registering means (301) configured to register a condition for consent regarding acquisition and use of biometric information of a person;
a server device (202) including consent condition managing means (302) configured to manage the condition for consent registered by the consent condition registering means; and
a biometric authentication apparatus (203A, 203B),
wherein the biometric authentication apparatus includes
acquiring means (303) configured to acquire the condition for consent from the server device, and
biometric authenticating means (308) configured to perform biometric authentication on the person based on the condition for consent.

12. The biometric authentication system according to claim 11,
wherein the consent condition registering means registers the condition for consent in the consent condition managing means based on a result set in a user interface via which the person sets the condition for consent.

13. The biometric authentication system according to claim 11,
wherein the biometric information includes at least any of a face image of the person and a face feature amount of the person, and
the biometric authentication is face authentication.

14. The biometric authentication system according to claim 11,
wherein the condition for consent is associated with a person ID unique for each person.

15. A method to be executed by a biometric authentication apparatus, comprising:
acquiring a condition for consent regarding consent to acquisition and use of biometric information of a person; and
performing biometric authentication on the person based on the condition for consent.

16. A computer program comprising instructions which, when the program is executed by a computer, cause the computer to carry out the method of claim 15.
